# EUROPEAN PATENT APPLICATION

(11) **EP 1 560 403 A1**
(43) Date of publication of application: **03.08.2005**
(21) Application number: 05100625.2
(22) Date of filing: 31.01.2005
(51) Int. Cl.: H04M 1/2745

(54) **System and method for predictive lookup of phone numbers**

(30) Priority: 29.01.2004 US 768035
(71) Applicant: MICROSOFT CORPORATION, Redmond, Washington 98052-6399 (US)
(72) Inventor: Stepanich, Darron Jack, 98052, Redmond (US); Flynt, David W., 98052, Redmond (US); Chen, Henry, 98052, Redmond (US); Ollis, Joseph Kirk, 98052, Redmond (US); Todd, Marc W., 98052, Redmond (US)
(74) Representative: Grünecker, Kinkeldey, Stockmair & Schwanhäusser

(57) **Abstract**

The present invention provides a method and system for finding and accessing a contact quickly and easily by filtering and searching through all of the contacts stored in the device based on user input. The filtered contacts may be readily accessed by various applications that use the contact information. When filtering, an input field appears within which a user may enter numbers and characters that is used in searching the contacts. Any information contained within the contact may be searched. In response to the characters input into the input field, a list of possible contacts is provided to the user. The input characters are highlighted in the list of possible contacts.

## Description

### Background of the Invention

Personal information managers such as in PDAs and cell phones typically maintain lists of contacts. These contact lists store information about each contact including items, such as: name, job title, company name, business number, home number, fax number, mobile number, email addresses, web pages, and the like. The contact lists can become very long. For example, some contact lists may include everyone in a large company. Finding contacts within these contact lists can be difficult.

Conventional methods of contacting a person rely on knowing specific information within the contact, including such items as, a person's telephone number, their email address, user ID, and the like. All of the conventional methods suffer in that they require a relatively significant user effort to obtain a desired contact.

The amount of user effort is increased should the first method of searching for the contact not result in the desired being found. For example, the user might search a call log only to find that the desired telephone number is not present in the call log at all. From there, the caller might select a contacts list and search through the contacts list for the telephone number only to find that the telephone number is not listed in the contacts list. The user might then search the speed dial numbers at last resulting in the telephone number.

Accordingly, what are desired are systems, methods and computer program products for finding and contacting a user with reduced effort.

### Summary of the Invention

The present invention is directed towards providing a method and system for finding and accessing a contact quickly and easily.

According to one aspect of the invention the search input is entered that is then used to search through contacts stored in the device. The filtered contacts may be readily accessed by various applications that use the contact information. When filtering, a user may enter numbers and characters that are used in searching the contacts. In response to the characters input, a list of possible contacts is provided to the user. The input characters are highlighted in the list of possible contacts.

According to another aspect of the invention, all of the information contained within a contact may be searched. For example, the search input could correspond to an address, a fax number, a last name, a note included within the contact, and the like.

According to another aspect of the invention, a number of contact lists are searched so as to allow a user to enter a request to find a contact without requiring that the user to specify where to specifically find the contact. For example, if the user request was in the form of dialing input, the caller need not specify whether the number is from the call log, a contacts list, whether the caller is engaging speed dial, whether the caller is first entering the area-code or whether the caller is just entering the local number.

According to another aspect of the invention, upon the user entering the search input to access a contact, contacts are retrieved that include the search input somewhere within the contact.

### Brief Description of the Drawings

FIGURE 1 illustrates an exemplary computing device that may be used according to exemplary embodiments of the present invention;
FIGURES 2A-B illustrates a series of displays as they might appear for an exemplary searching scenario;
FIGURE 3 schematically illustrates an architecture;
FIGURES 4A-4D illustrates a data structure that represents the duplicate remover output;
FIGURE 5 illustrates a process for allowing a user to enter a request to find a contact; and
FIGURE 6 illustrates a series of displays as they might appear for an exemplary searching scenario, in accordance with aspects of the invention.

### Detailed Description of the Preferred Embodiment

The present invention is directed at providing a method and system for finding and accessing a contact quickly and easily by filtering and searching through all of the contacts stored in the device based on user input. The filtered contacts may be readily accessed by various applications that use the contact information. When filtering, an input field appears within which a user may enter numbers and characters that is used in searching the contacts. In response to the characters input into the input field, a list of possible contacts is provided to the user. The input characters are highlighted in the list of possible contacts.

### Illustrative Operating Environment

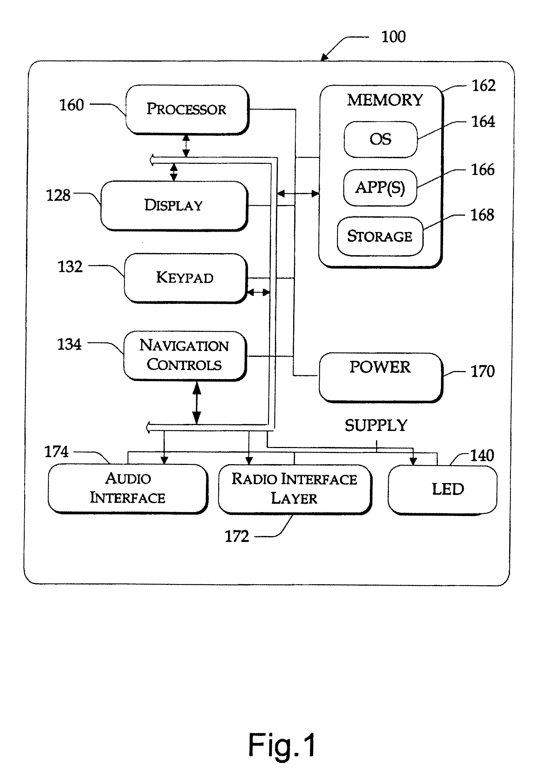

FIGURE 1 illustrates a mobile computing device that may be used according to an exemplary embodiment of the present invention. Mobile computing device 100 includes processor 160, memory 162, display 128, keypad 132, and navigation controls 134. Memory 162 generally includes both volatile memory (e.g., RAM) and non-volatile memory (e.g., ROM, Flash Memory, or the like). Mobile computing device 100 includes operating system 164, such as the Windows CE operating system from Microsoft Corporation, or another operating system, which is resident in memory 162 and executes on processor 160. Keypad 132 may be a push button numeric dialing pad (such as on a typical telephone), a multi-key keyboard (such as a conventional keyboard). Display 128 may be a liquid crystal display, or any other type of display commonly used in mobile computing devices. Display 128 may be touch-sensitive, and would then could also act as an input device.

One or more application programs 166 are loaded into memory 162 and run on the operating system 164. A smart dial contact search application resides on mobile computing device 100 and is programmed to provide operations relating to easily accessing contact information. The smart contact application may reside in the hardware or software of the device. Mobile computing device 100 also includes non-volatile storage 168 within memory 162. Non-volatile storage 168 may be used to store persistent information which should not be lost if mobile computing device 100 is powered down.

Mobile computing device 100 includes power supply 170, which may be implemented as one or more batteries. Power supply 170 might further include an external power source, such as an AC adapter or a powered docking cradle that supplements or recharges the batteries.

Mobile computing device 100 is shown with two types of optional external notification mechanisms: LED 140 and audio interface 174. These devices may be directly coupled to power supply 170 so that when activated, they remain on for a duration dictated by the notification mechanism even though processor 160 and other components might shut down to conserve battery power. Audio interface 174 is used to provide audible signals to and receive audible signals from the user. For example, audio interface 174 may be coupled to a speaker for providing audible output and to a microphone for receiving audible input, such as to facilitate a telephone conversation.

Mobile computing device 100 also includes a communications interface, such as wireless interface layer 172, that performs the function of transmitting and receiving wireless communications. The wireless interface layer 172 facilitates wireless connectivity between the mobile computing device 100 and the outside world. According to one embodiment, transmissions to and from the wireless interface layer 172 are conducted under control of the operating system 164. In other words, communications received by wireless interface layer 172 may be disseminated to application programs 166 via operating system 164, and vice versa.

Navigation controls 134 assist the user in navigating through various entries and options that may be illustrated on display 128. For example, users can use navigation control 134 to select a contact method from a selected contact. For example, a user may select a contact from a list of contacts returned from a smart dial contact search. The user could then press a button to contact the corresponding contact using the default communication method, or the user may navigate through the contact and select the desired form of communication to be used with the contact.

Various contacts are presented in a single user interface thus alleviating the user from selecting or otherwise having to be concerned about what contact list is to be used to access the contact. By merging the various contacts, the user keeps all contact options open.

While FIGURE 1 represents a suitable operating environment according to an embodiment of the invention, any device may be used that is capable of receiving a user-entered request (such as dialing input) in accordance with a variety of request methods (such as a variety of contact methods).

Communications connections are an example of communication media. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. The term computer readable media as used herein includes both storage media and communication media.

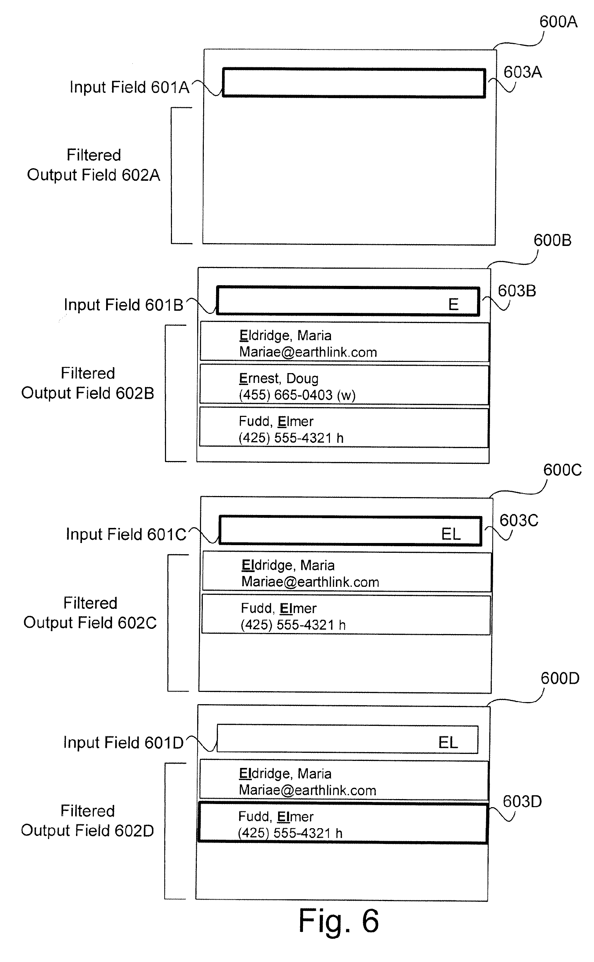

FIGURE 6 illustrates a series of displays 600A-D as they might appear, for example, on display 128 of FIGURE 1, during a searching scenario. The display 600 includes an input field 601, a filtered output field 602 and a focus frame 603. However, each of the displays (Display 600A-D) illustrate the display in different states. Accordingly, each of the display 600, the input field 601, the filtered output field 602 and the focus frame 603 are identified with a suffix A through D that corresponds to the different state.

Input field 601 allows the user to enter numbers/characters to search for a contact. According to embodiments of the invention, the user can search for a contact using any identifying information within a contact and then contact the resulting user using any of the available communications methods available for that user. For example, the user could contact an individual using a telephone number, email address, instant messaging identification, SMS message, and the like. The user could also search for a contact based on a note included within the contact.

The filtered output field 602 represents a unified area in which contacts found in response to the input are presented to the user.

Focus frame 603 allows the user to identify what item against which the user desires to take action. For example, while focus frame 603 highlights input field 601, the user may enter content into the input field. However, the user may also scroll the focus frame 603 down to one of the items in the filtered output field 602 in order to select that contact.

Display 600A is an initial state of a display with no search input entered into the input field 601 A, and with no contacts presented in the filtered output field 602A. Focus frame 603A highlights the input field 601 A thus reflecting that display 600A is ready to accept dialing input in the input field 601 A.

Display 600B illustrates the state after the user has entered an "E" in the input field 601B. The focus frame 603B remains over the input field 601B thus allowing this input. In response, the filtered output field 602B then presents three contacts corresponding to the single character search input. The user could have also entered a number within input field into input field 601B, or any other available character or icon that may be used in identifying a contact.

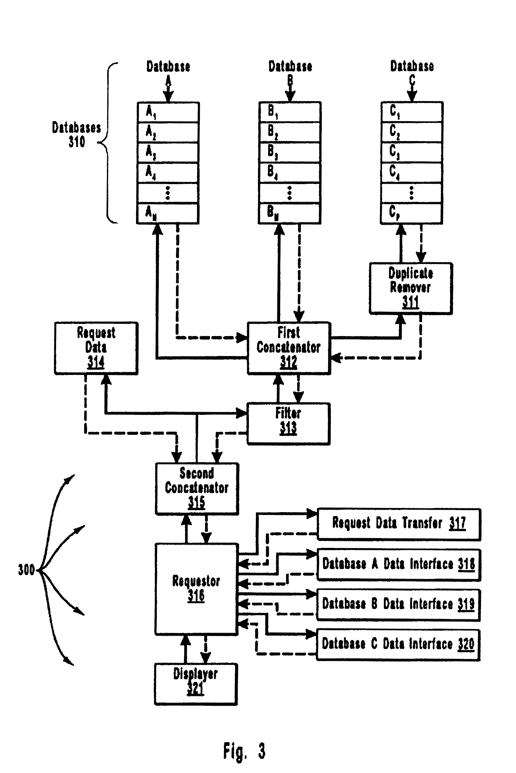

Display 600C illustrates the state after the user also enters an "L" with the accumulated search input being "EL". Focus frame 603C remains over the input field 601C thus still allowing this input. At this stage, filtering occurs as described in further detail below with respect to FIGURE 3 through FIGURE 5. In response to the filtering operation, the filtered output field 602C illustrates fewer contacts. The resulting entries are appropriate to the search input as emphasized by the bolded and underlined portions of the resulting entries.

As will be described in further detail hereinafter, the resulting entries illustrated in filtered output field 602 may have originated from separate databases in which the entries were represented using incompatible data structures. For example, some of the resulting entries may have originated from a contacts database, some from a speed dial database, and some from a call log. However, notwithstanding that the entries were originally represented at their source using different data structures, the entries are homogenous as they appear in the filtered output field 602.

Filtering may be stopped when further filtering would not result in a change in the contacts displayed in the filtered output field. For example, suppose that the search input represents a last name. Users often have numerous entries corresponding to family members who share the same last name. Accordingly, as the name is spelled out, the response entries may not change. Accordingly, unnecessary filtering is largely avoided resulting in processor savings that are especially significant in devices that have lower processing capabilities.

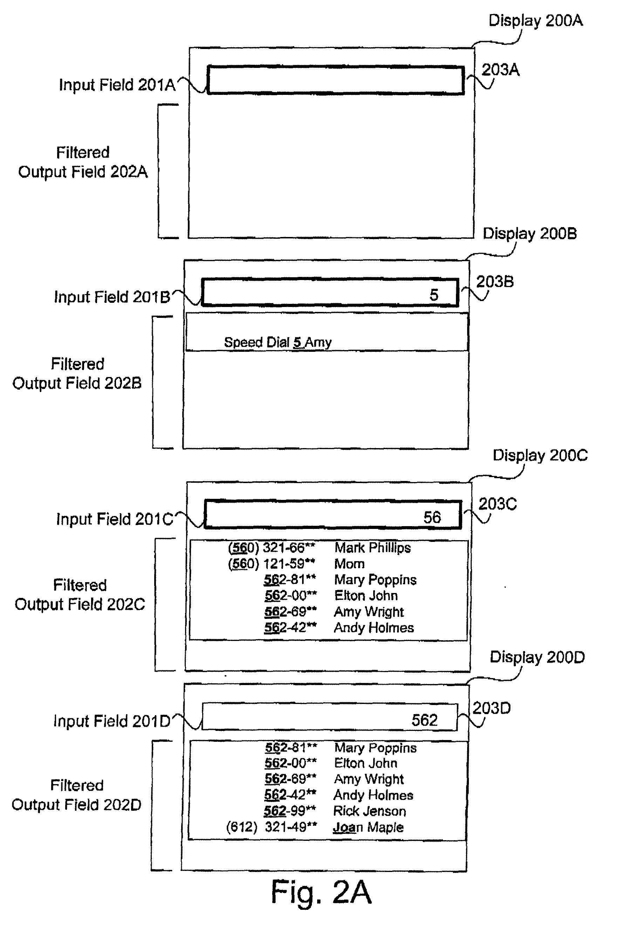

FIGURES 2A-B illustrates an exemplary searching scenario, in accordance with aspects of the invention.

Display 200A is an initial state of a display with no search input entered into the input field 201 A, and with no contacts presented in the filtered output field 202A.

Display 200B illustrates the state after the user has entered an "5" in the input field 201B. The focus frame 203B remains over the input field 201B thus allowing this input. In response, the filtered output field 202B then the fifth speed dial entry.

Display 200C illustrates the state after the user also enters an "6" with the accumulated search input being "56". Focus frame 203C remains over the input field 201 C thus still allowing this input. In response to the filtering operation, the filtered output field 202C illustrates more contacts. The resulting entries are appropriate to the search input as emphasized by the bolded and underlined portions of the resulting entries.

For example, the first two entries presuppose that the dialer is entering the first two digits of the area code first. The remaining four entries presuppose that the dialer is entering the first two digits of the local number.

The local numbers returned may be those entries conform to the dialing input, and that either did not have an area code specified, or those entries that included an area code that corresponds to a default area code. For example, if device 100 is currently in the 610 area code, and/or if the 610 area code is the area code of the telephone number of the telephonic device, the filtering may ignore the area code and just match the dialing input against the local number.

Display 200D shows after the user also enters a "2" with the accumulated dialing input being "562". The focus frame 203D remains over the input field 201D thus allowing this input as well. The response entries in the filtered output field 202D are then refreshed to reflect the additional dialing input. As described in further detail below, the response entries in the filtered output field 202 will not always change in response to additional dialing input.

The response entries of the filtered output field 202D now include five numbers that presuppose that the dialing input represents the first three digits of a local number. These five entries are identified by having underlined portions that match the dialing input.

In addition, there is an entry that presupposes that the dialing input represents the first name of an individual named "Joan". Referring to the keypad 132 of FIGURE 1, typically, the digits 0 and 2 through 9 have corresponding alphabetic letters listed on the buttons. As is common knowledge, entered digits may instead represent the corresponding alphabetic letters. For example, the digit "5" may also represent the letters "j", "k", or "I". The digit "6" also represents the letters "m", "n", or "o". The digit "2" also represents the letters "a", "b", or "c". Accordingly, the dialing input "562" might represents "Joa". Thus, the entry for Joan matches the dialing input as represented by the underlined portions of the entry. The user may also directly enter the letter directly if the device includes the capability.

Display 200E illustrates after the user also enters a "6" with the accumulated dialing input being "5626". The focus frame 203E remains over the input field 201E thus allowing this input. In this example, the dialing input in the input field 201E is now specific enough that all of the potential matches may now appear in the filtered output field 202E. For example, the top entry presupposes that the dialing input represents the first four digits of the local number. The middle two entries assume that the dialing input represents the first four letters of the first name corresponding to a telephone number. The lowest entry assumes that the dialing input represents the first four letters of the last name corresponding to a telephone number.

Display 200F illustrates the focus frame 203F moved over a particular entry in the filtered output field 202F. The movement of the focus frame 203F may be accomplished using, for example, the navigation controls 134 of FIGURE 1.

FIGURE 3 schematically illustrates an architecture 300, in accordance with aspects of the present invention. Each of the elements of the architecture 300 may be hardware, software, or a combination of hardware and software. In the embodiment described, each of the elements of the architecture 300 may be software modules that are emulated when the processor 160 of FIGURE 1 executes one of the application programs 166 of FIGURE 1. Throughout FIGURE 3, there are solid arrows leading from one module to the next. These solid arrows represent request paths for one or more requests from the module at the tail of the arrow to the module at the head of the arrow. There are also corresponding dashed arrows in the reverse direction of the solid arrow. The dashed arrows represent one or more responses to the one or more requests.

Architecture 300 includes databases 310 such as database A, database B, and database C. The databases are generically labeled to emphasize that the principles of the present invention may operate with many different kinds of databases having a variety of data structures. However, in this description, database A, B and C will often be referred to as a contacts (including pinned items and SIM contacts), speed dial, and call log database, respectively. Also, although three databases are shown, the present invention may work with other numbers of databases as well. Furthermore, although the databases are described as having entries that have incompatible data structures between databases, the databases may also have compatible data structures as well.

Databases A, B, and C have entries A₁ through A_{N}, B₁ through B_{M}, and C₁ through C_{P}, respectively. Each entry may represent any information that relates to a contact. For example, the entries may include any information typically found in a contact, a symbol that is used to represent a contact, a user name (such as an Instant Messenger (IM) user name), and the like. For example, a contact may include a name, title, company, fax number, mobile number, address, email address, IM user, and the like. A contact could also be located based on a time associated with the last contact.

Displayer module 321 assembles all the data structures necessary for device 100 to receive and present the filtered output results. The display module 321 does this even though the filtered output results may be from different databases. In order to accomplish this, the display module 321 directly or indirectly uses all of the other modules and databases illustrated in FIGURE 3.

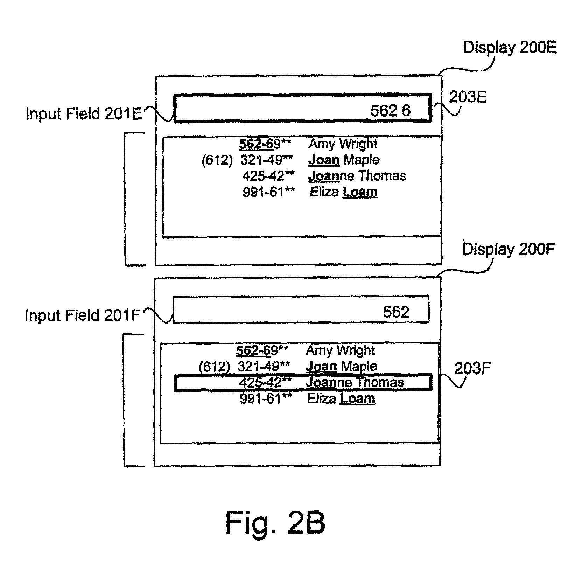

Specifically, when new information is entered that is to be displayed in the input field 201 of FIGURE 2, displayer 321 asks requestor module 316 for all the rows of information that are needed to fill in the display. This initial request begins a chain of requests that flow generally upward as illustrated in FIGURE 3. The requestor 316 then asks the second concatenator module 315 for the updated request data that is to appears in the input field 201 concatenated with all of the corresponding filtered entries from all of the databases 310. The second concatenator 315 then accesses the request data 314, and requests the updated filtered entries from the filter module 313.

In response, the filter 313 examines the updated request data 314 to determine whether the updated input warrants re-filtering. For example, the filter 313 may compare the previously filtered entries corresponding to the currently viewed items in the filtered output field 202 to see if the updated input would result in any of such items being filtered out. If the updated request data would not result in a change to the viewed data, the filter 313 notifies the second concatenator 315 of this. The second concatenator 315 would then concatenate the new request data to the old filtered data, which would then be returned to the requestor 316. In this case, if the displayer 321 were to scroll down the list in the output field, the filter would check the newly viewed items to see if they also would be eliminated by the most updated filtering.

If filtering is needed, filter 313 asks the first concatenation module 312 for the concatenated list of the databases 310 with duplicates removed. The first concatenator 312 then accesses database A and database B. The first concatenator 312 also requests a non-duplicated version of database C from the duplicate remover module 311.

Some of the databases may include entries with substantially duplicated information. For example, there may be numerous entries in the call log database since there may be many incoming calls registered from a particular telephone number. Although it is desirable to have such entries for each event in the context of call log, it is not desirable to have such duplication in the filtered output field 202 where perhaps only a telephone number and an associated contact are ultimately displayed. Accordingly, a duplicate remover module 311 examines each entry and removes duplicates.

Upon request for the non-duplicated version of a database, the duplicate remover 311 accesses the selected database in order to generate a non-duplicated version of the database. In one embodiment, the non-duplicated version of database does not change in response to additional dialing input. Accordingly, access to the database and regeneration of the non-duplicated version may be avoided. Instead, the duplicate remover 311 may simply store the non-duplicated version of the database C, and only regenerate the non-duplicated version periodically.

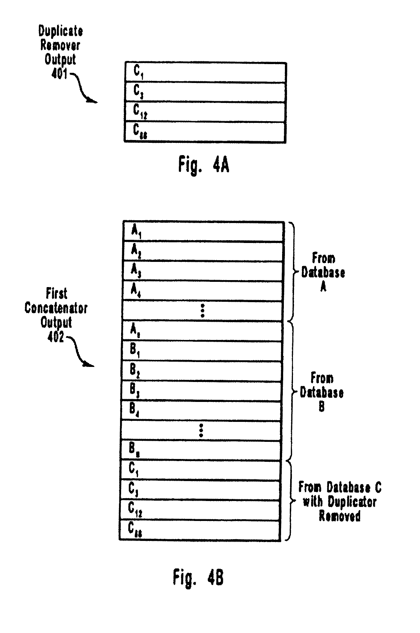

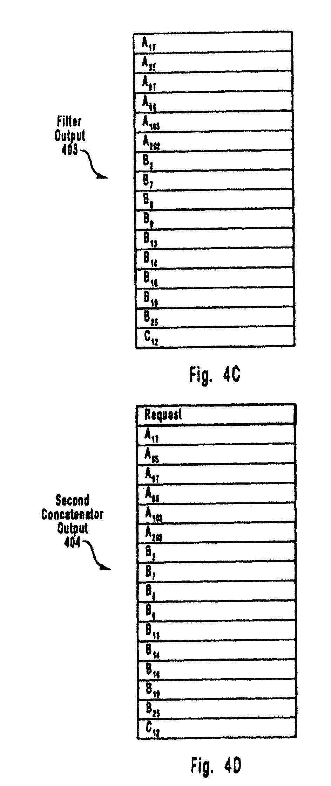

FIGURE 4A illustrates a data structure that represents the duplicate remover output 401, in accordance with aspects of the invention. In this example, the duplicate remover output 401 only has entries C₁, C₃, C₁₂, and C₈₈. The rest of the entries were deemed to be duplicates and thus removed by the duplicate remover 311.

The first concatenator 312 receives and concatenates an instance of the database A, an instance of the database B, and the duplicate remover output 401. The resulting output is illustrated in FIGURE 4B as the first concatenator output 402, which is returned to the filter 313.

The filter 313 then filters the first concatenator output 402 using the request data entered in the input field 201 as the filtering parameter. In one embodiment, the filter 313 checks for a match against any parameter that the user may intend for the filter to match against. For example, when entering dialing input into input field 201, the user may intend to enter a telephone number with the area code first, enter a telephone number without the area code, enter the first name of a desired callee, enter the last name of a desired callee, or the like. The filter 313 filters against all these parameters. The output from filter 313 is illustrated in FIGURE 4C as filter output 403. Note that some of the entries have been removed thus emphasizing that the output is filtered.

The second concatenator 315 receives and concatenates the request data with the filter output 403. The resulting output is illustrated in FIGURE 4D as second concatenator output 404.

The requestor 316 receives the second concatenated output 404 and then processes those entries that need to be displayed by the displayer. At this stage, the entries in the second concatenator output 404 represents entries from different databases. Accordingly, each of the entries in the second concatenator output 404 may have significantly different data structures and thus still be incompatible with display in a unified format. Accordingly, the requestor 316 uses various data interfaces 317, 318, 319 and 320 in order to properly format the entries in a unified manner.

The requestor 316 passes the request data to the request data interface 317. The request data interface 317 then passes back the request data formatted for presentation on display 200. For example, the font size of the request data may change depending on how many characters are entered in the input field 201. Specifically, the font size may be reduced as necessary to fit all of the request data in one line in the input field 201.

The requestor 316 passes in any entries from database A that are to be displayed to the database A data interface 318, any entries from database B that are to be displayed to the database B data interface 319, and any entries from database C that are to be displayed to the database C data interface 320. Database A data interface 318, database B data interface 319, and database C data interface 320 then return the entries with equivalent formatting such that the filter output field 202 displays the entries in a unified fashion regardless of the origin of the entry. The request 316 then passes the formatted entries to the displayer 321 for presentation on the display 200.

In addition, the filter 313 retrieves data appropriate to multiple request methods by filtering on multiple parameters that depend on the user's ambiguous intent. For example, the filter 313 may use the dialing input to match to a telephone number with area code, a telephone number without area code, an associated first name, an associated last name, of the like. Dialing using any of these filtering parameters may be viewed as being a separate dialing method in accordance with the present invention.

The filter 313 may query the requestor 316 for the proper data interfaces for the corresponding entries it is filtering to determine whether the entries satisfy the filtering criteria. Also, the duplicate remover 311 may query the requestor 316 for the proper data interfaces for corresponding entries in order to determine whether the corresponding entries are indeed duplicates.

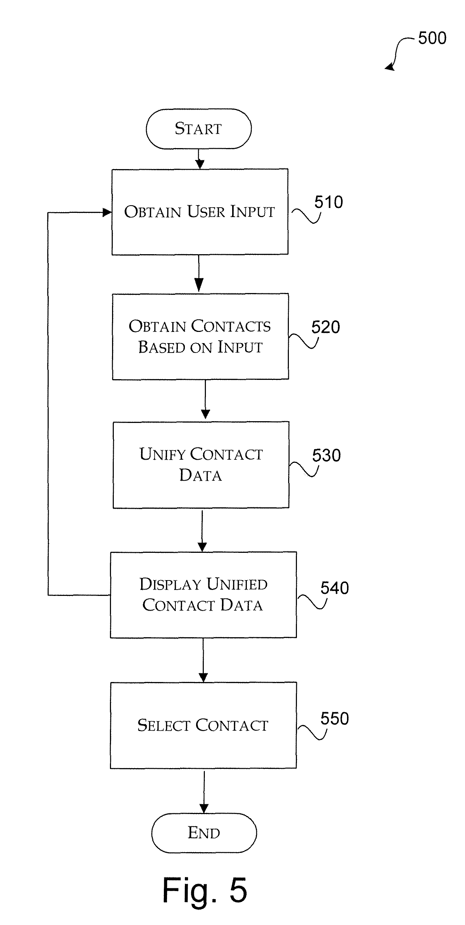

FIGURE 5 illustrates a process 500 for allowing a user to enter a request to find a contact, in accordance with the present invention. After a start block, the process moves to block 510 where user input is obtained for finding a contact. Clearing the input characters takes the user back to the top of the Contact list.

Next, moving to block 520, the process obtains the contacts that are appropriate based on the user's input. The contacts are obtained by searching. When filtering on the device from a contacts application or some other application on the device, such as a home screen (e.g. the Today Screen available on many mobile devices that utilize Microsoft mobile software), contact databases are searched. According to one embodiment, the contact databases include pinned items, recent calls, regular contacts, and SIM contacts. When filtering a specific category or data store only that particular database is searched. When filtering from the Today screen, the entire data store of contacts is searched.

According to one embodiment, all of the contacts accessible by the device are searched for appropriate contacts. For example, database A may include data appropriate for dialing from a contacts list, database B includes data appropriate for speed dialing, and database C includes data appropriate for dialing through a call log selection.

Transitioning to block 530, the contact data is unified into a single list. According to one embodiment, the matched results appear in the following order (from top to bottom): Speed Dial Contacts (In numbered order); Recent Calls (alphabetically then ascending order); Pinned Contacts (alphabetically); Regular Contacts (alphabetically); and SIM Contacts (alphabetically). According to another embodiment, the user may define the way the results are displayed.

The process then moves to block 540 where the results are displayed such that the user may review the contacts. According to one embodiment of the invention, the input is highlighted in the list view of the matched contacts. The process may then return to block 510 to obtain additional user input that focuses the search for the contacts. The process may continue until the user selects a contact at block 550. The process then ends and returns to processing other actions.

The above specification, examples and data provide a complete description of the manufacture and use of the composition of the invention. Since many embodiments of the invention can be made without departing from the spirit and scope of the invention, the invention resides in the claims hereinafter appended.

## Claims

1. A method for providing contacts to a device, comprising:
obtaining a search input from a user to locate a contact;
accessing contacts from the device;
searching information within each of the accessed contacts to locate relevant contacts that include the search input, wherein the information that may be searched includes any information contained within the contact;
unifying the relevant contacts; and
providing the unified contacts.

2. The method of Claim 1, wherein searching the information within each of the accessed contacts to locate the relevant contacts that include the search input, further comprises searching at least three fields within each of the accessed contacts.

3. The method of Claim 1, further comprising selecting a contact from the unified contacts and accessing the selected contact.

4. The method of Claim 1, wherein accessing contacts from the device further comprises accessing at least two different contact lists.

5. The method of Claim 2, wherein obtaining the search input may include obtaining at least one input selected from a character, number, and icon.

6. The method of Claim 5, wherein searching the information within each of the accessed contacts further comprises searching a portion of a field within the contact for the search input.

7. The method of Claim 5, further comprising searching a first database for a first portion of relevant contacts, the first portion containing one or more entries from the first database; searching a second database for a second portion of relevant contacts; wherein at least some of the entries in the first portion have a different data structure format than at least some of the entries in the second portion.

8. The method of Claim 6, wherein accessing contacts from the device further comprises accessing one or more of the following: a contacts database, a speed dial database, a call logs database, and a SIM contacts database.

9. The method of Claim 2, wherein unifying the relevant contacts further comprises removing duplicates.

10. A computer-readable medium for providing contacts to a device, comprising:
obtaining a search input from a user to locate a contact;
accessing contacts from at least two different sources on the device;
searching a majority of information within each of the accessed contacts to locate relevant contacts that include the search input;
unifying the relevant contacts; and
providing the unified contacts.

11. The computer-readable medium of Claim 10, wherein searching the majority of information within each of the accessed contacts to locate the relevant contacts that include the search input, further comprises searching at least three fields within each of the accessed contacts.

12. The computer-readable medium of Claim 10, further comprising selecting a contact from the unified contacts and accessing the selected contact.

13. The computer-readable medium of Claim 10, wherein obtaining the search input may include obtaining at least one input selected from a character, number, and icon.

14. The computer-readable medium of Claim 13, wherein searching the information within each of the associated contacts further comprises searching a portion of a field within the contact for the search input.

15. The computer-readable medium of Claim 13, further comprising searching a first database for a first portion of relevant contacts, the first portion containing one or more entries from the first database; searching a second database for a second portion of relevant contacts; wherein at least some of the entries in the first portion have a different data structure format than at least some of the entries in the second portion.

16. The computer-readable medium of Claim 15, wherein accessing contacts from the device further comprises accessing at least one or more of the following: a contacts database, a speed dial database, a call logs database, and a SIM contacts database.

17. The computer-readable medium of Claim 11, wherein unifying the relevant contacts further comprises removing duplicates.

18. A system for providing contacts to a device, comprising:
an input device configured to receive search input from a user;
a display configured to display contacts;
a data store arranged to store contacts; and
an application that is configured to perform the following actions, including:
obtaining the search input that is used to locate a contact;
accessing the contacts from the data store;
searching information within each of the accessed contacts to locate relevant contacts that include the search input, wherein a majority of information within each of the accessed contacts may be searched;
unifying the relevant contacts; and
displaying the unified contacts on the display.

19. The system of Claim 18, wherein obtaining the search input includes obtaining at least one input selected from a character, number, and icon.

20. The system of Claim 18, wherein searching the majority of the information within each of the associated contacts further comprises searching a portion of a field within the contact for the search input.

21. The system of Claim 20, wherein accessing the contacts from the data store further comprises accessing at least one or more of the following: a contacts database, a speed dial database, a call logs database, and a SIM contacts database.

22. The system of Claim 20, wherein unifying the relevant contacts further comprises removing duplicates.
